**Europäisches Patentamt**

**European Patent Office**

**Office européen des brevets**

(19)

(11) Veröffentlichungsnummer: **0 221 341**
**B1**

(12) **EUROPÄISCHE PATENTSCHRIFT**

(45) Veröffentlichungstag der Patentschrift:
15.11.89

(21) Anmeldenummer: 86113413.8

(22) Anmeldetag: 30.09.86

(51) Int. Cl.⁴: **C08L 71/04**, C08L 77/00
// (C08L71/04, 77:00, 33:26)

|ERRATUM|

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | | LAUTET BERICHTIGT:<br>SHOULD READ :<br>DEVRAIT ETRE LU : |
|---|---|---|---|---|---|
| Polyphenylethers, | 2 | | 2 | | Polyphenylenethers, |
| Benzolringe verstanden. | 2 | | 48/49 | | Benzolringe erhalten worden sind. |
| (vgl. US-A 33 379 792, | 3 | | 14/15 | | (vgl. US-A-3 379 792, |
| (hydriert) Styrol-Block-copolymerisat. | 3 | | 20/21 | | (hydriert)-Styrol-Blockco-polymerisat. |
| Gleit- und Enformungsmittel, | 3 | | 30 | | Gleit- und Entformungsmittel, |
| 7  45A₁  55B₁  10C₁  10C₁ | 4 | | 34 | | 7  45A₁  55B₁  10C₁  10D₁ |
| 8*  45A₁  55B₁  –  10C₁ | 4 | | 36 | | 8*  45A₁  55B₁  –  10D₁ |
| 9*  50A₁  50B₂  –  12C₁ | 4 | | 37 | | 9*  50A₁  50B₂  –  12D₁ |
| 10  50A₁  50B₂  13C₁  12C₁ | 4 | | 38 | | 10  50A₁  50B₂  13C₁  12D₁ |

| 7  $45A_1$  $55B_1$  $10C_1$  $10C_1$ | 4 | 34 | 7  $45A_1$  $55B_1$  $10C_1$  $10D_1$ |

Tag der Entscheidung )
über die Berichtigung )
Date of decision on )  30.5.90
rectification: ) . . . . . . . . . . . . . . . . . . . . . . .
Date de décision portant )
sur modification: )

Ausgabe- und Ver- )
öffentlichungstag: )  8.8.90
Issue and publication )
date: ) . . . . . . . . . . . . . . . . . . . . .
Date d'édition et de )
publication: )

Patbl.Nr) 90/32

EPB no:) . . . . . . . . .

Bull. no:)

**Europäisches Patentamt**

**European Patent Office**

**Office européen des brevets**

(19)

(11) Veröffentlichungsnummer: **0 221 341 B1**

(12) **EUROPÄISCHE PATENTSCHRIFT**

(45) Veröffentlichungstag der Patentschrift:
**15.11.89**

(21) Anmeldenummer: **86113413.8**

(22) Anmeldetag: **30.09.86**

(51) Int. Cl.⁴: **C08L 71/04**, C08L 77/00
// (C08L71/04, 77:00, 33:26)

(54) Mischungen aus Polyphenylenether und Polyamid und deren Verwendung zur Herstellung thermoplastischer Formmassen.

(30) Priorität: **03.10.85 DE 3535273**

(43) Veröffentlichungstag der Anmeldung:
**13.05.87 Patentblatt 87/20**

(45) Bekanntmachung des Hinweises auf die Patenterteilung:
**15.11.89 Patentblatt 89/46**

(84) Benannte Vertragsstaaten:
**BE DE FR GB NL**

(56) Entgegenhaltungen:
**EP-A- 0 046 040**
**EP-A- 0 142 166**
**EP-A- 0 147 874**
**US-A- 4 402 902**

(73) Patentinhaber: **BASF Aktiengesellschaft,
Carl-Bosch-Strasse 38, D-6700 Ludwigshafen(DE}**

(72) Erfinder: **Taubitz, Christof, Dr., In der Dreispitz 15,
D-6706 Wachenheim(DE)**
Erfinder: **Seiler, Erhard, Dr., Erpolzheimer Strasse 1,
D-6700 Ludwigshafen(DE)**
Erfinder: **Hambrecht, Juergen, Dr., Am Klosterwald 31,
D-4400 Muenster-Hiltrup(DE)**
Erfinder: **Mitulla, Konrad, Dr., Schwalbenweg 31,
D-6700 Ludwigshafen(DE)**

## Beschreibung

Die Erfindung betrifft thermoplastische Formmassen aus 94,9 bis 5 Gewichtsteilen mindestens eines Polyphenylethers, der gegebenenfalls bis zu 50 Gew.-% durch ein thermoplastisches Styrolpolymerisat (I) ersetzt sein kann, 5 bis 94,9 Gewichtsteile mindestens eines thermoplastischen Polyamids, 0 bis 30 Gewichtsteilen eines Synthesekautschuks und gegebenenfalls üblichen Zusatzstoffen in üblichen Mengen.

Derartige Mischungen können zu Formmassen oder Formkörpern verarbeitet werden, wodurch die Verwendungsmöglichkeiten des an sich nur schlecht verarbeitbaren Polyphenylenethers vergrößert werden kann.

Es ist bereits aus dem US-Patent 3 379 792 bekannt, Mischungen aus Polyphenylenether mit 0,1 bis 25 Gew.-% Polyamid zu Formkörpern wie Stangen, Rohren, Behälter etc. durch Extrusion zu verarbeiten. Durch den Zusatz des Polyamids konnten die Fließeigenschaften des Polyphenylenethers verbessert werden. Es wird jedoch in dieser Druckschrift festgestellt, daß bei einem Polyamidzusatz in einer Menge von über 20 Gew.-% andere Eigenschaften des Polyphenylenethers in beträchtlichem Ausmaß verschlechtert werden.

Im GB-Patent 2 054 623 ist auch bereits eine Dreikomponentenmischung aus 30 bis 95 Gew.-% eines Polyamids und 70 bis 5 Gew.-% eines Polyphenylenethers beschrieben, die zur weiteren Verbesserung der Verarbeitbarkeit ein Styrolhomo- oder -copolymerisat enthält. Formkörper aus derartigen Mischungen weisen eine verbesserte Schlagfestigkeit und Lösungsmittelbeständigkeit im Vergleich zu Formkörpern aus reinem Polyphenylenether auf. Bei der Herstellung von Formmassen aus den bekannten Mischungen ist es jedoch erforderlich, einen längeren Mischvorgang bei Schmelztemperatur vorzunehmen. Beim Mischen bei Schmelztemperatur über längere Zeit treten jedoch leicht Abbauerscheinungen auf.

Ähnliche Nachteile weisen die aus neueren Literaturstellen bekannten, Polyphenylenether und Polyamide enthaltenden Dreikomponentenmischungen mit Polystyrolen oder kautschukmodifizierten Styrolharzen (vgl. US-Patent 4 242 254 und EP-A 107 660), Copolymerisaten eines Olefins mit Glycidyl(meth)-acrylat (vgl. EP-A 55 473), Copolymerisaten aus Styrol mit Maleinsäureanhydrid oder Maleinsäureimid (vgl. EP-A 46 040), Dienpolymeren, Polyepichlorhydrinen etc. (vgl. EP-A 24 120) oder Copolymerisaten aus Styrol und (Meth-)Acrylnitril (vgl. EP-Anm. Nr. 85115161.3) auf.

Aufgabe der vorliegenden Erfindung war es daher, thermoplastische Formmassen auf Basis Polyphenylenether und Polyamide aufzufinden, die neben einer guten Verarbeitbarkeit gute thermische, mechanische und elektrische Eigenschaften aufweisen und sich insbesondere durch eine hohe Schlagzähigkeit und gute Lösungsmittelbeständigkeit auszeichnen.

Diese Aufgabe wird gelöst durch thermoplastische Formmassen entsprechend den Patentansprüchen 1 bis 5. Die thermoplastischen Formmassen enthalten 94,9 bis 5, bevorzugt 70 bis 20, insbesondere 60 bis 35 Gewichtsteile Polyphenylenether und 5 bis 94,9, bevorzugt 5 bis 70, insbesondere 25 bis 65 Gewichtsteile Polyamid sowie gegebenenfalls bis zu 30, bevorzugt 2 bis 20 Gewichtsteile eines synthetischen Kautschuks, wobei der Polyphenylenether gegebenenfalls bis zu 50, bevorzugt durch 10 bis 50 Gew.-% durch ein thermoplastisches Styrolpolymerisat (I) ersetzt sein kann. Die thermoplastischen Formmassen erhält man durch Mischen der Einzelkomponenten bei Temperaturen von 230 bis 320°C in üblichen Mischvorrichtungen wie Extrudern oder Knetern. Falls ein Teil des Polyphenylenethers durch Styrolpolymerisate (I) ersetzt ist, ist es vorteilhaft, die Polyphenylenether mit diesen Styrolpolymerisaten vorzumischen und dieses Gemisch dann mit einem Gemisch aus Polyamid und dem anderen Styrolpolymerisat (II) in der Schmelze zu mischen.

Unter Polyphenylenethern werden hochmolekulare Poly(phenylenoxide) verstanden, die durch oxidative Kupplung von alkylsubstituierten Phenolen, insbesondere von 2,6-Dialkylphenolen zu einer Kette alkylsubstituierter, in para-Stellung durch Sauerstoffatome etherartig gebundene Benzolringe verstanden. Die Polyphenylenether weisen bevorzugt Molekulargewichte aus dem Viskositätsmittel ($M_V$) von 10 000 bis 90 000, insbesondere 20 000 bis 80 000, bestimmt nach der in «Macromolecular Synthesis» $\underline{1}$, (1978), Seite 78 angegebenen Methode, auf. Die Polyphenylenether sind an sich aus der Literatur seit längerem bekannt (vgl. US-Patente 3 661 848, 3 219 625, 3 378 505, 3 306 874, 3 306 875 und 3 639 656), so daß sich hier eine weitere Beschreibung erübrigt. Besonders geeignete Polyphenylenether sind Poly(2,6-dimethyl-1,4-phenylen)ether, Poly(2,6-diethyl-1,4-phenylen)ether oder Poly(2-methyl-6-ethyl-1,4-phenylen)ether. Es können auch Gemische verschiedener Polyphenylenether oder Copolymere verschiedener Alkylphenole verwendet werden.

Als thermoplastische Styrolpolymerisate (I) kommen alle üblichen Homo- und Copolymerisate des Styrols in Betracht. Üblicherweise liegen die Molekulargewichte der gebräuchlichen Styrolpolymerisate (Gewichtsmittel $M_W$) zwischen 150 000 und 300 000. Geeignete Styrolpolymerisate (I) sind beispielsweise Polystyrol, Poly-α-methylstyrol, Poly-p-methylstyrol oder Kautschuk modifizierte Styrolpolymerisate, insbesondere auf Basis Styrol-Butadien-, Butadien-, Butadien-Styrol-Block- oder Isopren-Styrol-Blockpolymerisate. Derartige Styrolpolymerisate sind dem Fachmann aus der Literatur und Praxis so geläufig, daß sich an dieser Stelle eine nähere Erläuterung erübrigt (vgl. «Ullmanns Encyklopädie der technischen Chemie», 4. Auflage, Band 19, Seiten 265 bis 295, Verlag Chemie GmbH, 1980). Mischungen aus geeigneten Styrolpolymerisaten (I) mit Polyphenylenethern sind zudem in zahlreichen Literaturstellen bereits beschrieben (vgl. GB-A 2 054 623, US-A 4 242 254, EP-A 107 660, US-A 4 433 088 und EP-A 55 473). Die Styrolpolymerisate sind nur gegebenenfalls in den Mischungen vorhanden vorzugsweise nämlich dann, wenn aufgrund der Zusammensetzung der anderen Mischungskomponenten die Verarbeitbarkeit durch Zugabe geeigneter Mengen thermoplastischen Styrolpolymerisats noch weiter verbessert werden kann.

Die thermoplastischen Formmassen enthalten obligatorisch mindestens ein übliches thermoplastisches Polyamid. Derartige Polyamide sind so bekannt, daß sie hier nicht im einzelnen abgehandelt werden müssen (vgl. «Ullmanns Encyklopädie der technischen Chemie», 4. Auflage, Band 19, Seiten 39 bis 59, Verlag Chemie GmbH, 1980). Die Molekulargewichte (Zahlenmittel $M_n$) liegen bei den gebräuchlichen Polyamiden bei 15 000 bis 50 000. Besonders geeignete Polyamide sind Polyamid-6, Polyamid-66 sowie Polyamide, die aus Hexamethylendiamin und Isophthalsäure sowie Terephthalsäure aufgebaut sind. Es ist auch möglich, Mischungen verschiedener Polyamide zu verwenden. Mischungen aus geeigneten Polyamiden und Polyphenylenethern sind in mehreren Druckschriften bereits vorbeschrieben (vgl. US-A 33 379 792, GB-A 2 054 623, US-A 4 242 254, EP-A 92 776, 129 825, 131 445, 46 040 oder 24 120).

Zur Schlagmodifizierung können die thermoplastischen Formmassen Synthesekautschuk enthalten auf Basis Polybutadien-, Acrylat-, Styrol-Butadien-, Acrylnitril-Butadien-, Ethylen-Propylen-, polyisoprenstyrolgepfropfter Ethylen-Propylen-Kautschuke, Polyesterelastomere, Ethylenkautschuke und lonomere, Styrol-Butadien-Blockcopolymere einschließlich Styrol-Butadien-Styrol-Blockcopolymere, analoge Isopren-Blockcopolymere oder (teil)hydrierte Blockcopolymere wie Styrol-Butadien (hydriert) Styrol-Blockcopolymerisat. Derartige synthetische Kautschuke sind an sich bekannt und zusammenfassend in «Ullmanns Encyklopädie der technischen Chemie», 4. Auflage, Band 13, Seiten 595 bis 634, Verlag Chemie GmbH, 1977, beschrieben. Mischungen aus Polyphenylenethern mit schlagzähmodifizierendem Synthesekatuschuk sind bereits Stand der Technik, so daß sich weitere Erläuterungen erübrigen (vgl. EP-A 55 473 und 46 040). Der gegebenenfalls in der thermoplastischen Formmasse einzusetzende schlagzäh modifizierte Kautschuk wird dann mitverwendet, wenn von der thermoplastischen Formmasse besonderer Wert auf Schlagzähigkeit gelegt wird.

Darüber hinaus können die erfindungsgemäßen thermoplastischen Formmassen gegebenenfalls übliche Zusatzstoffe in üblichen Mengen enthalten. als Zusatzstoffe seien genannt Hitze- und Lichtstabilisatoren, Gleit- und Enformungsmittel, Färbemittel, wie Farbstoffe und Pigmente. Geeignete Zusatzstoffe sind auch Verstärkungsmittel, wie Glasfasern, Wollastonit, Talkum, Kreide, Zinksulfid, Gipsfasern, synthetische Calciumsilikate, Kaolin, calciniertes Kaolin, in Mengen bis zu 50 Gew.-%, vorzugsweise bis 30 Gew.-%, bezogen auf die thermoplastische Formmasse, ferner Phosphorverbindungen, wie Phosphate, Phosphorsäureester, Phosphorigsäureester, Phosphinsäureester, Phosphonigsäureester oder organische Phosphinoxide.

Erfindungsgemäß sollen die thermoplastischen Formmassen zusätzlich noch 0,1 bis 30, bevorzugt 5 bis 25, insbesondere 18 bis 20 Gewichtsteile eines vom Styrolpolymerisat (I) verschiedenen Styrolcopolymerisats (II) enthalten, das (Alkyl-)Styrol und (Meth-)Acrylamid sowie gegebenenfalls (Meth-)-Acrylnitril einpolymerisiert hat, wobei das Copolymerisat (II) gegebenenfalls 2 bis 20 Gewichtsprozent, bezogen auf (II), eines mit (Alkyl-)Styrol und (Meth-)Acrylamid gepfropften Synthesekautschuks enthält. Bevorzugt enthält das Styrolcopolymerisat (II) 70 bis 99,5, insbesondere 90 bis 98 Gew.-% (Alkyl-)Styrol und 0,5 bis 30, insbesondere 2 bis 10 Gew.-% (Meth-)Acrylamid und gegebenenfalls (Meth-)-Acrylnitril einpolymerisiert. Geeignete (Alkyl-)Styrole sind dabei Styrol, α-Methylstyrol oder p-Methylstyrol oder deren Gemische. Das Molekulargewicht der Copolymerisate (II) (Gewichtsmittel $M_w$) liegt vorteilhaft zwischen 5000 und 200 000. Als Comonomer zu (Alkyl-)Styrol ist insbesondere das (Meth-)-Acrylamid geeignet, es können aber auch Mischungen von (Meth-)Acrylamid und unter 10 Gew.-%, bezogen auf das Gewicht, (Meth-)Acrylnitril verwendet werden. Styrolcopolymerisate (II) der beschriebenen Art sind an sich aus der Literatur bekannt (vgl. «Encyclopedia of Polymer Science and Engineering» 2nd Ed., Vol. 1 «Acrylamide Polymers», Seiten 1698 bis 211, John Wiley & Sons, New York, 1985 sowie «Styrene, its Polymers, Copolymers and Derivatives», R.H. Boundy, Reinhold Publishing Corp., New York, 1952).

Sie können durch Copolymerisation der monomeren in einem geeigneten Lösungsmittel, z.B. Alkylbenzolen wie Ethylbenzol erhalten werden. Zum Beispiel können Styrol und Acrylamid bei 140°C mit Radikalstarter oder bevorzugt thermisch ohne Initiator kontinuierlich bei 9 bar und 4 Stunden Verweilzeit copolymerisiert werden. Das Styrolcopolymerisat (II) enthält gegebenenfalls 2 bis 20, insbesondere 5 bis 10 Gew.-%, bezogen auf das Copolymerisat (II), eines mit (Alkyl-)Styrol und (Meth)Acrylamid gepfropften synthetischen Kautschuks. Als synthetischer Kautschuk wird bevorzugt Polybutadien, Styrol-Butadien-Copolymerisat, Styrol-Butadien-Styrol-Blockcopolymerisat, oder Styrol-Butadien (hydriert) Styrol-Blockcopolymerisat eingesetzt. Derartige Pfropfcopolymerisate werden durch Copolymerisation der Monomeren in Gegenwart des Synthesekautschuks erhalten (vgl. z.B. US-Patent 3 509 237 oder DE-Patent 2 747 823).

Es ist ein Vorteil der erfindungsgemäßen thermoplastischen Formmassen, daß beim Verarbeiten zu Formmassen bzw. zu Formkörpern keine Phasentrennung eintritt, weil die einzelnen Polymeren ineinander optimal dispergiert sind. Die neuen Mischungen haben die günstige Eigenschaft, daß sie gut verarbeitbar sind, Formkörper mit hohem mechanischem Niveau liefern, die sich zudem durch eine gute Schlagzähigkeit und Lösungsmittelresistenz auszeichnen. Die erfindungsgemäßen thermoplastischen Formmassen eignen sich zur Herstellung von Formkörpern durch Spritzgießen oder Extrusion.

Der Gegenstand der Erfindung sei an folgenden Beispielen veranschaulicht, wobei die genannten Teile sich jeweils auf das Gewicht beziehen.

Beispiele 1 bis 10

Eingesetzte Polymere

$A_1$: Poly-(2,6-dimethyl-1,4-phenylen)-ether mit einer relativen Viskosität von 0,57

$B_1$: Polyamid-6 mit einer relativen Viskosität von 3,4

$B_2$: Polyamid-6 mit einer relativen Viskosität von 4,0

$C_1$: Styrol-Acrylamid-Copolymerisat (90 Gew.-% Styrol, 10 Gew.-% Acrylamid), hergestellt durch kontinuierliche Lösungscopolymerisation bei 130°C und 4 Stunden Verweilzeit mit einem $M_w$ = 70 000

$C_2$: Styrol-Acrylamid-Copolymerisat (93 Gew.-% Styrol, 7 Gew.-% Acrylamid) mit einem $M_w$ = 45 000

$D_1$: Styrol-Butadien-Styrol-Blockcopolymerisat, hergestellt durch anionische Copolymerisation (32 Gew.-% Styrol, 68 Gew.-% Butadien) mit einem $M_w$ = 110 000

Herstellung der thermoplastischen Formmassen

Die Polymeren wurden auf einem Zweischneckenextruder der Firma Werner & Pfleiderer bei 280°C gemischt, die Formmasse wird granuliert und im Spritzguß zu Formkörpern verarbeitet.

| Beispiele Nr. | Teile Polyphenylen-ether | Teile Polyamid | Teile Styrol/ Acrylamid Copolymer | Teile synthetischer Kautschuk | DIN 53453 Schlagzähigkeit $kJ/m^2$ | DIN 53453 Kerb-schlagzähigkeit $kJ/m^2$ |
|---|---|---|---|---|---|---|
| 1* | 50 $A_1$ | 50 $B_1$ | — | — | 10,8 | 0,5 |
| 2* | 40 $A_1$ | 60 $B_2$ | — | — | 11,5 | 0,9 |
| 3 | 50 $A_1$ | 50 $B_1$ | 10 $C_1$ | — | 24,0 | 3,5 |
| 4 | 40 $A_1$ | 60 $B_2$ | 15 $C_2$ | — | 38,0 | 4,4 |
| 5 | 35 $A_1$ | 65 $B_1$ | 15 $C_2$ | — | 42,0 | 4,9 |
| 6 | 40 $A_1$ | 60 $B_1$ | 6 $C_1$ | — | 29,0 | 2,6 |
| 7 | 45 $A_1$ | 55 $B_1$ | 10 $C_1$ | 10 $C_1$ | 82,0 | 9,5 |
| 8* | 45 $A_1$ | 55 $B_1$ | — | 10 $C_1$ | 18,9 | 1,2 |
| 9* | 50 $A_1$ | 50 $B_2$ | — | 12 $C_1$ | 16,0 | 1,3 |
| 10 | 50 $A_1$ | 50 $B_2$ | 13 $C_1$ | 12 $C_1$ | kein Bruch | 9,8 |

* Vergleichsbeispiel

## Patentansprüche

1. Thermoplastische Formmassen aus 94,9 bis 5 Gewichtsteilen mindestens eines Polyphenylenethers, der gegebenenfalls bis zu 50 Gew.-% durch ein thermoplastisches Styrolpolymerisat (I) ersetzt sein kann, 5 bis 94,9 Gewichtsteilen mindestens eines thermoplastischen Polyamids, 0 bis 30 Gewichtsteilen eines Synthesekautschuks und gegebenenfalls üblichen Zusatzstoffen in üblichen Mengen, dadurch gekennzeichnet, daß sie zusätzlich enthalten 0,1 bis 30 Gewichtsteile eines von (I) verschiedenen Styrolcopolymerisats (II), das (Alkyl-)Styrol und (Meth-)Acrylamid sowie gegebenenfalls (Meth-)Acrylnitril einpolymerisiert hat, wobei das Copolymerisat (II) gegebenenfalls 2 bis 20 Gew.-% eines mit (Alkyl-)-Styrol und (Meth-)Acrylamid gepfropften Synthesekautschuks enthält.

2. Thermoplastische Formmassen nach Anspruch 1, dadurch gekennzeichnet, daß sie 5 bis 25 Gewichtsteile des Styrolcopolymerisats (II) enthalten.

3. Thermoplastische Formmassen nach Anspruch 1, dadurch gekennzeichnet, daß das Styrolcopolymerisat (II) 70 bis 99,5 Gew.-% (Alkyl-)Styrol und 0,5 bis 30 Gewichtsprozent (Meth-)Acrylamid und gegebenenfalls (Meth-)Acrylnitril einpolymerisiert hat.

4. Thermoplastische Formmassen nach Anspruch 1, dadurch gekennzeichnet, daß das (Alkyl-)Styrol und (Meth-)Acrylamid auf Synthesekautschuk aufgepfropft sind.

5. Thermoplastische Formmassen nach Anspruch 1, dadurch gekennzeichnet, daß der Synthesekautschuk Polybutadien, Styrol-Butadien-Copolymerisat, Styrol-Butadien-Styrol-Blockcopolymerisat oder Styrol-Butadien(hydriert)-Styrol-Blockcopolymerisat ist.

6. Verwendung thermoplastischer Formmassen nach Anspruch 1 zur Herstellung von Formmassen bzw. Formkörpern.

**Claims**

1. A thermoplastic molding material consisting of from 94.9 to 5 parts by weight of one or more polyphenylene ethers, which may be replaced by not more than 50% by weight of a thermoplastic styrene polymer (I), and from 5 to 94.9 parts by weight of one or more thermoplastic polyamides, from 0 to 30 parts by weight of a synthetic rubber and, if required, conventional additives in the usual amounts, wherein the said molding material additionally contains from 0.1 to 30 parts by weight of a styrene copolymer (II) which differs from (I) and possesses, as copolymerized units, (alkyl)styrene and (meth)-acrylamide and, if required, (meth)acrylonitrile, the copolymer (II) containing, if necessary, from 2 to 20% by weight of a synthetic rubber grafted with (alkyl)styrene and (meth)acrylamide.

2. A thermoplastic molding material as claimed in claim 1, which contains from 5 to 25 parts by weight of the styrene copolymer (II).

3. A thermoplastic molding material as claimed in claim 1, wherein the styrene copolymer (II) possesses, as copolymerized units, from 70 to 99.5% by weight of (alkyl)styrene and from 0.5 to 30 percent by weight of (meth)acrylamide and, if required, (meth)acrylonitrile.

4. A thermoplastic molding material as claimed in claim 1, wherein the (alkyl)styrene and (meth)acrylamide are grafted onto synthetic rubber.

5. A thermoplastic molding material as claimed in claim 1, wherein the synthetic rubber is polybutadiene, a styrene/butadiene copolymer, a styrene/butadiene/styrene block copolymer or a styrene/butadiene/(hydrogenated)/ styrene block copolymer.

6. Use of a thermoplastic molding material as claimed in claim 1 for the production of moldings and shaped articles.

**Revendications**

1. Masses à mouler thermoplastiques se composant de 94,9 à 5 parties en poids d'au moins un poly (oxyde de phénylène) qui peut éventuellement être remplacé par jusqu'à 50% en poids d'un polymère styrénique (I) thermoplastique, de 5 à 94,9 parties en poids d'au moins un polyamide thermoplastique, de 0 à 30 parties en poids d'un caoutchouc synthétique et éventuellement des additifs usuels en quantités usuelles, caractérisées en ce qu'elles contiennent en outre de 0,1 à 30 parties en poids d'un copolymère styrénique (II) différent de (I) qui contient en chaîne polymère un (alkyl)styrène et du (méth)acrylamide ainsi qu'éventuellement du (méth)acrylonitrile, le copolymère (II) contenant éventuellement de 2 à 20% en poids d'un caoutchouc de synthèse greffé d'(alkyl)styrène et de (méth)acrylamide.

2. Masses à mouler thermoplastiques selon la revendication 1, caractérisées en ce qu'elles contiennent de 5 à 25 parties en poids du copolymère styrénique (II).

3. Masses à mouler thermoplastiques selon la revendication 1, caractérisées en ce que le copolymère styrénique (II) a en chaîne polymère de 70 à 99,5% en poids d'(alkyl)styrène et de 0,5 à 30% en poids de (méth)acrylamide et éventuellement du (méth)acrylonitrile.

4. Masses thermoplastiques selon la revendication 1, caractérisées en ce que l'(alkyl)styrène et le méthacrylamide sont greffés sur du caoutchouc de synthèse.

5. Masses thermoplastiques selon la revendication 1, caractérisées en ce que le caoutchouc de synthèse est du polybutadiène, un copolymère styrène/butadiène, un copolymère séquencé styrène/butadiène/styrène ou un copolymère séquencé styrène/butadiène(hydrogéné)/styrène.

6. Utilisation de masses à mouler thermoplastiques selon la revendication 1, pour la préparation de masses à mouler et d'objets moulés.